# EUROPEAN PATENT SPECIFICATION

(11) **EP 4 474 420 B1**
(45) Date of publication and mention of the grant of the patent: **26.11.2025**
(21) Application number: 24176899.3
(22) Date of filing: 20.05.2024
(51) Int. Cl.: C08L 9/06, B60C 1/00

(54) **RUBBER COMPOSITION FOR TIRES AND PNEUMATIC TIRE**
KAUTSCHUKZUSAMMENSETZUNG FÜR REIFEN UND LUFTREIFEN
COMPOSITION DE CAOUTCHOUC POUR PNEUS ET PNEUMATIQUE

(30) Priority: 05.06.2023 JP 2023092346
(43) Date of publication of application: 11.12.2024
(73) Proprietor: Toyo Tire Corporation, Itami-shi, Hyogo 664-0847 (JP)
(72) Inventor: IKEUCHI, Yuuki, Hyogo, 664-0847 (JP); MINOUCHI, Norio, Hyogo, 664-0847 (JP)
(74) Representative: Cabinet Beau de Loménie

(56) References cited:
- EP-B1- 3 575 330
- JP-A- 2014 133 843

## Description

### BACKGROUND OF THE INVENTION

### Field of the Invention

The present invention relates to a rubber composition for tires and a pneumatic tire.

### Description of the Related Art

Pneumatic tires are designed to run under various conditions, and it is absolutely necessary to improve tire performance on, for example, wet roads (hereinafter also referred to as "WET performance").

Patent Document 1 mentioned below discloses a cross-linkable or cross-linked rubber composition usable for constituting a tire tread, the composition being based on at least: one or more diene elastomers comprising 50 phr to 100 phr of a majority diene elastomer selected from the group consisting of styrene-butadiene copolymers prepared in solution, styrene-butadiene copolymers prepared in emulsion, natural polyisoprenes, synthetic polyisoprenes having a cis-1,4 linkage content greater than 95%, and mixtures of these elastomers and 0 phr to 50 phr of a minority diene elastomer being a polybutadiene having a cis-1,4 linkage content greater than 90%; and a plasticizer comprising a vegetable oil containing at least one glycerol oleic acid triester, wherein the plasticizer comprises in a mass fraction of 45% to 100%, as the vegetable oil, a sunflower oil the oleic acid of which represents a mass fraction equal to or greater than 70% of the entire fatty acid, and in a mass fraction of 55% to 0%, one or more plasticizing oils extracted from petroleum, of paraffinic, aromatic, or naphthenic type, the amount of sunflower oil lies within a range of 10 to 40 phr, and the amount of optional plasticizing oil extracted from petroleum lies within a range of 0 to 30 phr.

Patent Document 2 mentioned below discloses a rubber composition for tire treads, comprising: a raw material rubber including 20 to 50 parts by weight of a first styrene-butadiene rubber, 20 to 50 parts by weight of a second styrene-butadiene rubber, and 10 to 40 parts by weight of a butadiene rubber (BR); and 80 to 180 parts by weight of a reinforcing filler, 2 to 50 parts by weight of natural oil, and 2 to 30 parts by weight of a hydrocarbon resin with respect to 100 parts by weight of the raw material rubber.

### Prior Art Documents

### Patent Documents

Patent Document 1: JP-B2-4209200
Patent Document 2: JP-A-2019-172957
Patent Document 3: EP3575330B1
Patent Document 4: JP2014133843A

### SUMMARY OF THE INVENTION

Both Patent Documents 1 and 2 disclose techniques to improve the WET performance of pneumatic tires. As a result of intensive studies by the present inventors, it has been found that there is a trade-off between WET performance and rolling resistance, and there is still a room for improvement also in the wear resistance of pneumatic tires.

In light of such circumstances, it is an object of the present invention to provide a rubber composition for tires for use as a raw material of a vulcanized rubber for tires achieving a good balance among improved WET performance, improved rolling resistance, and improved wear resistance, and a pneumatic tire including a vulcanized rubber of the rubber composition.

The above object can be achieved by the following configurations. Specifically, the present invention relates to a rubber composition for tires containing a rubber component, carbon black, and vegetable oil, wherein the carbon black has a nitrogen adsorption specific surface area of 120 to 250 (m²/g).

A content of the carbon black is 70 to 150 parts by mass when a total amount of the rubber component is taken as 100 parts by mass.

A content of the vegetable oil is 20 to 100 parts by mass when a total amount of the rubber component is taken as 100 parts by mass.

According to an embodiment, the carbon black has a nitrogen adsorption specific surface area of 160 to 250 (m²/g).

According to an embodiment, the vegetable oil has an iodine value of 95 or less.

According to an embodiment, the vegetable oil is sunflower oil.

The present invention also relates to a pneumatic tire including a rubber member obtained by vulcanizing and molding any one of the rubber compositions for tires as defined above.

There is an inverse relationship between the nitrogen adsorption specific surface area and particle diameter of carbon black, and therefore carbon black having a large nitrogen adsorption specific surface area has a small particle diameter. Carbon black having a small particle diameter, such as SAF or carbon black smaller in particle diameter than SAF, tends to be poor in dispersibility in rubber because when such carbon black is added to rubber, the viscosity of a rubber compound during mixing becomes very high so that it is difficult to uniformly mix the rubber compound. Such a tendency becomes more conspicuous when the amount of carbon black added is larger. Relating to such a tendency, the present inventors have found that when carbon black having a nitrogen adsorption specific surface area of 120 to 250 (m²/g) is added to rubber, the plasticizing performance of a rubber compound during mixing is enhanced by adding vegetable oil together with the carbon black so that the dispersibility of the carbon black in the rubber is significantly enhanced, and this allows a resulting vulcanized rubber to achieve a good balance between improved WET performance, improved rolling resistance, and improved wear resistance. It should be noted that when carbon black smaller in particle diameter is used or when the amount of the carbon black added is increased, it is expected that the viscosity of a rubber compound during mixing becomes significantly high so that the dispersibility of the carbon black further deteriorates. However, as a result of intensive studies by the present inventors, it has been found that the plasticizing effect of vegetable oil on a rubber compound is enhanced when carbon black smaller in particle diameter is used or when the amount of the carbon black added is increased so that a resulting vulcanized rubber achieves a good balance among improved WET performance, improved rolling resistance, and improved wear resistance.

A vulcanized rubber of the rubber composition for tires according to the present invention achieves a good balance among improved WET performance, improved rolling resistance, and improved wear resistance. Therefore, a vulcanized rubber of the rubber composition for tires according to the present invention is particularly useful for pneumatic tire treads.

### DETAILED DESCRIPTION OF THE PREFERRED EMBODIMENTS

A rubber composition for tires according to the present invention contains a rubber component, carbon black, and vegetable oil.

The rubber composition for tires according to the present invention contains a rubber component. As the rubber component, for example, a diene-based rubber is preferred. Examples of the diene-based rubber include, but are not limited to, natural rubber (NR), isoprene rubber (IR), butadiene rubber (BR), styrene-butadiene rubber (SBR), acrylonitrile-butadiene rubber (NBR), chloroprene rubber (CR), styrene-isoprene copolymer rubber, butadiene-isoprene copolymer, and styrene-isoprene-butadiene copolymer rubber. These butadiene-based rubbers may be used singly or in combination of two or more of them.

The rubber composition for tires according to the present invention contains carbon black having a small particle diameter, specifically carbon black having a nitrogen adsorption specific surface area of 120 to 250 (m²/g). In general, when such carbon black having a small particle diameter is added to rubber, the viscosity of a rubber compound during mixing becomes very high so that it is difficult to uniformly mix the rubber compound. In the present invention, however, carbon black is added together with vegetable oil, and therefore the plasticizing performance of a rubber compound during mixing is enhanced so that the dispersibility of the carbon black in rubber is significantly enhanced. It should be noted that in the present invention, the dispersibility improving effect of the vegetable oil, which finally leads to the effect of improving WET performance, rolling resistance, and wear resistance in a balanced way, is particularly enhanced when the particle diameter of the carbon black is smaller or when the amount of the carbon black added is larger. Specifically, the lower limit of nitrogen adsorption specific surface area of the carbon black used in the present invention is preferably 130 (m²/g), more preferably 160 (m²/g). On the other hand, the upper limit of nitrogen adsorption specific surface area of the carbon black used in the present invention is preferably 250 (m²/g), more preferably 225 (m²/g). The lower limit of content of the carbon black used in the present invention is 70 parts by mass, particularly preferably 80 parts by mass when the total amount of the rubber component is taken as 100 parts by mass. On the other hand, the upper limit of content of the carbon black used in the present invention is preferably 150 parts by mass, more preferably 140 parts by mass, particularly preferably 130 parts by mass when the total amount of the rubber component is taken as 100 parts by mass.

The rubber composition according to the present invention contains vegetable oil together with carbon black having a specific particle diameter. From the viewpoint of improving the dispersibility of the carbon black and the viewpoint of finally improving the WET performance, rolling resistance, and wear resistance of a resulting vulcanized rubber in a balanced way, vegetable oil having an oleic acid content of 40 mass% or more is preferably used, vegetable oil having an oleic acid content of 50 mass% or more is more preferably used, and vegetable oil having an oleic acid content of 70 mass% or more is particularly preferably used. The vegetable oil used in the present invention preferably has an iodine value of 95 or less and more preferably has an iodine value of 90 or less. The amount of double bonds in such vegetable oil is small to some extent, which makes it possible to prevent a deterioration in scorchability when a vulcanized rubber is produced. The vegetable oil used in the present invention is preferably sunflower oil or palm oil, particularly preferably sunflower oil. The lower limit of content of the vegetable oil used in the present invention is 20 parts by mass, particularly preferably 30 parts by mass when the total amount of the rubber component is taken as 100 parts by mass. On the other hand, the upper limit of content of the vegetable oil used in the present invention is preferably 100 parts by mass, more preferably 80 parts by mass, particularly preferably 70 parts by mass when the total amount of the rubber component is taken as 100 parts by mass.

The rubber composition for tires according to the present invention may contain, in addition to the rubber component, the carbon black, and the vegetable oil, silica, a silane coupling agent, a vulcanizing agent, a vulcanization accelerator, an antiaging agent, stearic acid, a softener such as wax or oil, and a processing aid.

Examples of the silica to be used include silicas usually used for rubber reinforcement, such as wet silica, dry silica, sol-gel silica, and surface-treated silica. Among these, wet silica is preferred. However, from the viewpoint of maintaining the effect of improving the dispersibility of carbon black at a higher level, the rubber composition for tires according to the present invention preferably contains no silica, and even when silica is contained, the content of silica is preferably 10 parts by mass or less, more preferably 5 parts by mass or less when the total amount of the rubber component is taken as 100 parts by mass.

When silica is contained as a filler, a silane coupling agent is also preferably contained together. The silane coupling agent is not limited as long as sulfur is contained in the molecule thereof, and various silane coupling agents to be added to rubber compositions together with silica may be used. Examples of such silane coupling agents include: sulfidesilanes such as bis(3-triethoxysilylpropyl)tetrasulfide (e.g., "Si69" manufactured by Degussa), bis(3-triethoxysilylpropyl)disulfide (e.g., "Si75" manufactured by Degussa), bis(2-triethoxysilylethyl)tetrasulfide, bis(4-triethoxysilylbutyl)disulfide, bis(3-trimethoxysilylpropyl)tetrasulfide, and bis(2-trimethoxysilylethyl)disulfide; mercaptosilanes such as γ-mercaptopropyltrimethoxysilane, γ-mercaptopropyltriethoxysilane, mercaptopropylmethyldimethoxysilane, mercaptopropyldimethylmethoxysilane, and mercaptoethyltriethoxysilane; and protected mercaptosilanes such as 3-octanoylthio-1-propyltriethoxysilane and 3-propionylthiopropyltrimethoxysilane.

As the vulcanizing agent, sulfur can suitably be used. The sulfur may be ordinary sulfur for rubber, and sulfur such as powdered sulfur, precipitated sulfur, insoluble sulfur, and highly dispersible sulfur can be used. The content of the vulcanizing agent in the rubber composition for tires according to the present invention is preferably 0.5 to 3.5 parts by mass when the total amount of the rubber component is taken as 100 parts by mass.

Examples of the vulcanization accelerator include vulcanization accelerators usually used for rubber vulcanization, such as a sulfenamide-based vulcanization accelerator, a thiuram-based vulcanization accelerator, a thiazole-based vulcanization accelerator, a thiourea-based vulcanization accelerator, a guanidine-based vulcanization accelerator, and a dithiocarbamic acid salt-based vulcanization accelerator, and these may be used singly or in an appropriate combination of two or more of them.

Examples of the antiaging agent include antiaging agents usually used for rubber, such as an aromatic amine-based antiaging agent, an amine-ketone-based antiaging agent, a monophenol-based antiaging agent, a bisphenol-based antiaging agent, a polyphenol-based antiaging agent, a dithiocarbamic acid salt-based antiaging agent, and a thiourea-based antiaging agent, and these may be used singly or in an appropriate combination of two or more of them.

The rubber composition for tires according to the present invention is obtained by kneading not only the rubber component, the carbon black, and the vegetable oil but also silica, a silane coupling agent, a vulcanizing agent, a vulcanization accelerator, zinc oxide, an antiaging agent, stearic acid, a softener such as wax, a processing aid, and others using a kneading machine usually used in the rubber industry, such as a Banbury mixer, a kneader, or a roll.

A method for blending the above components is not limited, and any one of the following methods may be used: a method in which components to be blended other than vulcanization-type compounding agents such as a vulcanizing agent and a vulcanization accelerator are previously kneaded to prepare a master batch, the remaining components are added to the master batch, and the resultant is further kneaded, a method in which components are added in any order and kneaded, and a method in which all the components are added at the same time and kneaded.

A vulcanized rubber of the rubber composition for tires according to the present invention achieves a good balance among improved WET performance, improved rolling resistance, and improved wear resistance. Therefore, a vulcanized rubber of the rubber composition for tires according to the present invention is particularly useful for pneumatic tire treads.

### Examples

The present invention will more specifically be described below with reference to examples.

### (Preparation of rubber compositions for tires)

A rubber composition for tires of each of Examples 1 to 6 and Comparative Examples 1 to 3 was prepared by blending compounding agents with 100 parts by mass of a rubber component in accordance with a formulation shown in Tables 1 and 2 and kneading the resultant using an ordinary Banbury mixer. The compounding agent shown in Tables 1 and 2 are as follows.

### (Rubber component)

· SBR1 (ESBR (emulsion-polymerized SBR)): trade name "SBR1502" (manufactured by ENEOS Materials Corporation)
· SBR2 (SSBR (solution-polymerized SBR)): trade name "HPR355" (manufactured by ENEOS Materials Corporation)
· BR1: trade name "BR150B" (manufactured by UBE Elastomer Co., Ltd.)

### (Carbon black)

· Carbon black 1 (CB1) (SAF): trade name "Seast 9" (manufactured by TOKAI CARBON CO., LTD.), nitrogen adsorption specific surface area 142 (m²/g)
· Carbon black 2 (CB2) (SAF): trade name "DIABLACK UX10" (manufactured by Mitsubishi Chemical Corporation), nitrogen adsorption specific surface area 190 (m²/g)

### (Vegetable oil)

· Vegetable oil 1 (soybean refined oil): (manufactured by The Nisshin OilliO Group, Ltd.), iodine value: 128, oleic acid: 23 mass%
· Vegetable oil 2 (sunflower oil): (manufactured by The Nisshin OilliO Group, Ltd.), iodine value: 84, oleic acid: 82 mass%
· Vegetable oil 3 (PL65 (palm olein) (manufactured by The Nisshin OilliO Group, Ltd.), iodine value: 65, oleic acid: 48 mass%

### (Other components)

· Silica: trade name "Nipsil AQ" (manufactured by TOSOH SILICA CORPORATION)
· Silane coupling agent: trade name "Si69" (manufactured by Degussa)
· Naphthenic oil: trade name "Process NC140" (manufactured by JOMO)
· Stearic acid: trade name "LUNAC S-20" (manufactured by Kao Corporation)
· Zinc oxide: trade name "Zinc white #1" (manufactured by MITSUI MINING & SMELTING CO., LTD.)
· Wax: trade name "OZOACE0355" (manufactured by NIPPON SEIRO CO., LTD.)
· Antiaging agent 1: trade name "NOCRAC 6C" (manufactured by OUCHI SHINKO CHEMICAL INDUSTRIAL CO., LTD.)
· Antiaging agent 2: trade name "ANTAGE RD" (manufactured by Kawaguchi Chemical Industry Co., Ltd.)
· Hydrocarbon resin: trade name "Petrotack 90" (manufactured by Tosoh Corporation)
· Vulcanization accelerator 1: trade name "NOCCELER D" (manufactured by OUCHI SHINKO CHEMICAL INDUSTRIAL CO., LTD.)
· Vulcanization accelerator 2: trade name "SOXINOL CZ" (manufactured by SUMITOMO CHEMICAL COMPANY, LIMITED)
· Sulfur: trade name "Powder Sulfur" (manufactured by Tsurumi Chemical Industry Co., ltd.)

Unvulcanized samples of the rubber compositions of Examples 1 to 6 and Comparative Examples 1 to 3 obtained above were prepared, and the viscosity (processability) of the unvulcanized rubber compositions and the WET index (WET performance), heat generation index (rolling resistance), and LA index (wear resistance) of vulcanized rubbers were evaluated.

### (Viscosity (processability) of unvulcanized rubber compositions)

In accordance with JIS K6300, the unvulcanized rubber was preheated at 100°C for 1 minute and then a torque value after 4 minutes was measured in Mooney unit using a rotor-less Mooney viscometer manufactured by Toyo Seiki Seisaku-sho, Ltd. In Examples 1 and 2, the viscosity was expressed as an index number determined by taking the value of Comparative Example 1 as 100, and in Examples 3 to 6 and Comparative Example 3, the viscosity was expressed as an index number determined by taking the value of Comparative Example 2 as 100. A smaller index number indicates that the viscosity of the unvulcanized rubber is lower and therefore processability is more excellent.

### (WET index (WET performance) of vulcanized rubbers)

A loss coefficient tan δ was measured at a frequency of 10 Hz, a static strain of 10%, a dynamic strain of 1%, and a temperature of 0°C using a viscoelasticity tester manufactured by Toyo Seiki Seisaku-sho, Ltd. In Examples 1 and 2, the viscosity was expressed as an index number determined by taking the value of Comparative Example 1 as 100, and in Examples 3 to 6 and Comparative Example 3, the viscosity was expressed as an index number determined by taking the value of Comparative Example 2 as 100. A larger index number indicates that wet grip performance is higher.

### (Heat generation index (rolling resistance) of vulcanized rubbers)

A loss coefficient tan δ was measured at a frequency of 10 Hz, a static strain of 10%, a dynamic strain of 1%, and a temperature of 60°C using a viscoelasticity tester manufactured by Toyo Seiki Seisaku-sho, Ltd. In Examples 1 and 2, the viscosity was expressed as an index number determined by taking the value of Comparative Example 1 as 100, and in Examples 3 to 6 and Comparative Example 3, the viscosity was expressed as an index number determined by taking the value of Comparative Example 2 as 100. A smaller index number indicates that less heat is generated and therefore rolling resistance performance is more excellent.

### (LA index (wear resistance) of vulcanized rubbers)

In accordance with JIS K6264, the amount of wear was measured using a Lambourn abrasion tester at a load of 3 kg, a slip ratio of 20%, and a temperature of 23°C. In Examples 1 and 2, the amount of wear was expressed as an index number determined by taking the reciprocal of value of Comparative Example 1 as 100, and in Examples 3 to 6 and Comparative Example 3, the amount of wear was expressed as an index number determined by taking the reciprocal of value of Comparative Example 2 as 100. A larger index number indicates that wear resistance is more excellent.

**[Table 1]**

| | Comparative Example 1 | Example 1 | Example 2 |
|---|---|---|---|
| (Formulation) | | | |
| SBR1 | 40 | 40 | 40 |
| SBR2 | 60 | 60 | 60 |
| CB1 | 90 | 90 | |
| CB2 | | | 87 |
| Naphthenic oil | 40 | | |
| Vegetable oil 2 | | 38 | 39 |
| Stearic acid | 2 | 2 | 2 |
| Zinc oxide | 4 | 4 | 4 |
| Wax | 2 | 2 | 2 |
| Antiaging agent 1 | 2 | 2 | 2 |
| Antiaging agent 2 | 1 | 1 | 1 |
| Hydrocarbon resin | 10 | 10 | 10 |
| Vulcanization accelerator 1 | 0.3 | 0.3 | 0.3 |
| Vulcanization accelerator 2 | 2 | 2 | 2 |
| Sulfur | 2 | 2 | 2 |
| (Evaluations) | | | |
| Viscosity (processability) of unvulcanized rubber composition | 100 | 92 | 97 |
| WET index (WET performance) of vulcanized rubber | 100 | 104 | 109 |
| Heat generation index (rolling resistance) of vulcanized rubber | 100 | 98 | 99 |
| LA index (wear resistance) of vulcanized rubber | 100 | 103 | 109 |

As can be seen from the results shown in Table 1, in a case where the content of carbon black is as large as about 90 parts by mass when the total amount of the rubber component is taken as 100 parts by mass, the unvulcanized rubber compositions of Examples 1 and 2 using sunflower oil being vegetable oil are lower in viscosity than the unvulcanized rubber composition of Comparative Example 1 using naphthenic oil being mineral oil, and are therefore excellent in dispersibility of carbon black. Further, it can be seen that vulcanized rubbers of the unvulcanized rubber compositions of Examples 1 and 2 achieve a good balance among improved WET performance, improved rolling resistance, and improved wear resistance. Particularly, it can be seen that in the case of Example 2 using carbon black 2 having a nitrogen adsorption specific surface area of 190 (m²/g), WET performance and wear resistance are significantly improved.

**[Table 2]**

| | Comparative Example 2 | Example 3 | Comparative Example 3 | Example 4 | Example 5 | Example 6 |
|---|---|---|---|---|---|---|
| (Formulation) | | | | | | |
| SBR1 | 40 | 40 | 40 | 40 | 40 | 40 |
| SBR2 | 50 | 50 | 50 | 50 | 50 | 50 |
| BR | 10 | 10 | 10 | 10 | 10 | 10 |
| CB1 | 120 | 120 | | | | |
| CB2 | | | 117 | 117 | 115 | 116 |
| Silica | | | | | 6 | 6 |
| Silane coupling agent | | | | | 0.5 | 0.5 |
| Naphthenic oil | 65 | | 65 | | | |
| Vegetable oil 1 | | | | | | 64 |
| Vegetable oil 2 | | 62 | | 63 | | |
| Vegetable oil 3 | | | | | 64 | |
| Stearic acid | 2 | 2 | 2 | 2 | 2 | 2 |
| Zinc oxide | 4 | 4 | 4 | 4 | 4 | 4 |
| Wax | 2 | 2 | 2 | 2 | 2 | 2 |
| Antiaging agent 1 | 2 | 2 | 2 | 2 | 2 | 2 |
| Antiaging agent 2 | 1 | 1 | 1 | 1 | 1 | 1 |
| Hydrocarbon resin | 10 | 10 | 10 | 10 | 10 | 10 |
| Vulcanization accelerator 1 | 0.3 | 0.3 | 0.3 | 0.3 | 0.3 | 0.3 |
| Vulcanization accelerator 2 | 2 | 2 | 2 | 2 | 2 | 2 |
| Sulfur | 2 | 2 | 2 | 2 | 2 | 2 |

| (Evaluations) | | | | | | |
|---|---|---|---|---|---|---|
| Viscosity (processability) of unvulcanized rubber composition | 100 | 92 | 107 | 98 | 98 | 100 |
| WET index (WET performance) of vulcanized rubber | 100 | 107 | 101 | 109 | 110 | 108 |
| Heat generation index (rolling resistance) of vulcanized rubber | 100 | 97 | 103 | 99 | 98 | 100 |
| LA index (wear resistance) of vulcanized rubber | 100 | 107 | 101 | 116 | 119 | 115 |

As can be seen from the results shown in Table 2, in a case where the content of carbon black is as particularly large as about 120 parts by mass when the total amount of the rubber component is taken as 100 parts by mass, the unvulcanized rubber compositions of Examples 3 and 4 using sunflower oil being vegetable oil and the unvulcanized rubber composition of Example 5 using palm oil are lower in viscosity than the unvulcanized rubber compositions of Comparative Examples 2 and 3 using naphthenic oil being mineral oil, and are therefore excellent in dispersibility of carbon black. It should be noted that the unvulcanized rubber composition of Example 6 using soybean oil was similar in viscosity to the unvulcanized rubber composition of Comparative Example 2 using naphthenic oil being mineral oil. Further, it can be seen that vulcanized rubbers of the unvulcanized rubber compositions of Examples 3 to 5 achieve a good balance among improved WET performance, improved rolling resistance, and improved wear resistance. Particularly, it can be seen that in the case of Examples 4 and 5 using carbon black 2 having a nitrogen adsorption specific surface area of 190 (m²/g), WET performance and wear resistance are further improved.

## Claims

1. A rubber composition for tires, comprising a rubber component, carbon black, and vegetable oil, the carbon black having a nitrogen adsorption specific surface area of 120 to 250 (m²/g), a content of the vegetable oil being 20 to 100 parts by mass when a total amount of the rubber component is taken as 100 parts by mass, **characterized in that** a content of the carbon black is 70 to 150 parts by mass when a total amount of the rubber component is taken as 100 parts by mass.

2. The rubber composition for tires according to claim 1, wherein the carbon black has a nitrogen adsorption specific surface area of 160 to 250 (m²/g).

3. The rubber composition for tires according to claim 1 or 2, wherein the vegetable oil has an iodine value of 95 or less.

4. The rubber composition for tires according to any one of claims 1 to 3, wherein the vegetable oil is sunflower oil.

5. A pneumatic tire comprising a rubber member obtained by vulcanizing and molding the rubber composition for tires according to any one of claims 1 to 4.

## Patentansprüche

1. Kautschukzusammensetzung für Reifen, umfassend eine Kautschukkomponente, Industrieruß und Pflanzenöl, wobei der Industrieruß eine spezifische Oberfläche der Stickstoffadsorption von 120 bis 250 (m²/g) aufweist, wobei ein Gehalt des Pflanzenöls 20 bis 100 Masseteile beträgt, wenn eine Gesamtmenge der Kautschukkomponente als 100 Masseteile herangezogen wird, **dadurch gekennzeichnet, dass** ein Gehalt des Industrierußes 70 bis 150 Masseteile ist, wenn eine Gesamtmenge der Kautschukkomponente als 100 Masseteile herangezogen wird.

2. Kautschukzusammensetzung für Reifen nach Anspruch 1, wobei der Industrieruß eine spezifische Oberfläche der Stickstoffadsorption von 160 bis 250 (m²/g) aufweist.

3. Kautschukzusammensetzung für Reifen nach Anspruch 1 oder 2, wobei das Pflanzenöl einen Iodwert von 95 oder weniger aufweist.

4. Kautschukzusammensetzung für Reifen nach einem der Ansprüche 1 bis 3, wobei das Pflanzenöl Sonnenblumenöl ist.

5. Luftreifen, der ein Kautschukelement umfasst, das durch Vulkanisieren und Ausformen der Kautschukzusammensetzung für Reifen nach einem der Ansprüche 1 bis 4 erhalten wurde.

## Revendications

1. Composition de caoutchouc pour pneus, comprenant un composant caoutchouc, du noir de carbone et une huile végétale, le noir de carbone ayant une surface spécifique d'adsorption d'azote de 120 et 250 (m²/g), la teneur de l'huile végétale étant de 20 à 100 parties en masse lorsque la quantité totale du composant caoutchouc est considérée comme étant égale à 100 parties en masse, **caractérisée en ce que**
la teneur en noir de carbone est de 70 à 150 parties en masse lorsque la quantité totale du composant caoutchouc est considérée comme étant égale à 100 parties en masse.

2. Composition de caoutchouc pour pneus selon la revendication 1, dans laquelle le noir de carbone a une surface spécifique d'adsorption d'azote de 160 à 250 (m²/g).

3. Composition de caoutchouc pour pneus selon la revendication 1 ou 2, dans laquelle l'huile végétale a un indice d'iode inférieur ou égal à 95.

4. Composition de caoutchouc pour pneus selon l'une quelconque des revendications 1 à 3, dans laquelle l'huile végétale est l'huile de tournesol.

5. Pneumatique comprenant un élément en caoutchouc obtenu par vulcanisation et moulage de la composition de caoutchouc pour pneus selon l'une quelconque des revendications 1 à 4.
